# EUROPEAN PATENT SPECIFICATION

(11) **EP 0 683 580 B1**
(45) Date of publication and mention of the grant of the patent: **27.09.2000**
(21) Application number: 95303476.6
(22) Date of filing: 22.05.1995
(51) Int. Cl.: H04J 3/16

(54) **Method for connecting an HDSL transmission link to an SDH network**
Verbindungsverfahren einer HDSL Übertragungsstrecke mit einem SDH-Netz
Méthode de connexion d'une voie de transmission HDSL avec un réseau SDH

(30) Priority: 20.05.1994 FI 942372
(43) Date of publication of application: 22.11.1995
(73) Proprietor: Nokia Networks Oy, 02150 Espoo (FI)
(72) Inventor: Nyman, Kai, FIN-02660 Espoo (FI); Patana, Jari, FIN-01620 Vantaa (FI)
(74) Representative: Peltonen, Antti Sakari

(56) References cited:
- EP-A- 0 565 890

## Description

The invention relates to a method according to the preamble of the accompanying claim 1 for connecting an HDSL transmission link to an SDH network.

The HDSL (High bit rate Digital Subscriber Line) transmission technique relates to transmitting a 2 Mbit/s digital signal in a metallic twin cable. The ETSI (European Telecommunications and Standards Institute) recommendation DTR/TM-3017 defines the HDSL transmission technique as a transmission method of several different applications. An individual HDSL transceiver system comprises transceivers, employing echo cancellation technique, connected to each other via a bidirectional transmission link formed by a (copper) twin cable. The HDSL transmission system may comprise two or three such separate transceiver systems adjacent to each other, the transmission rate used over each parallel link being thus a sub-rate of 2 Mbit/s; in the case of three parallel pairs the rate is 784 kbit/s, and in the case of two parallel pairs 1168 kbit/s. The aforementioned recommendation defines how 2 Mbit/s signals, such as the VC-12 signals of the SDH network or the 2048 kbit/s signals according to the CCITT recommendations G.703/G.704, are transmitted in the HDSL system. The HDSL system is not described closer here, however, since the present invention does not require any changes to be made in the HDSL system, but the system operates in a manner known per se. The aforementioned specification is referred to for a more detailed description of the HDSL system.

The present invention does not require any changes to be made in the SDH (Synchronous Digital Hierarchy) system either, but all the SDH-specific functions needed in the invention are known per se. Therefore the SDH system will not be described closer either. The SDH system is described in greater detail for example in references [1] and [2] (the references are listed at the end of the specification).

According to the ETSI recommendations, it is thus possible, through HDSL links, to transmit a VC-12 signal of the SDH network further from the SDH trunk network. In a way this means that the operations of the SDH network are brought closer to the customer (i.e. subscriber). The basis for the ETSI recommendations has been that the HDSL link is synchronized with the VC-12 frame, which means in practice that the position of the first byte in the VC-12 frame is fixedly occupied by the V5 byte of the VC-12 frame. According to the ETSI recommendations, the VC-12 frame is thus mapped into the 500 µs core frame of the HDSL system in such a way that the first byte in the VC-12 frame is always the V5 byte, which is mapped into the first byte of the core frame. Correspondingly, the other bytes of the VC-12 frame are mapped into their own fixed positions. Such mapping is used in EP-A-565890.

The VC-12 signals to be transmitted to the HDSL link may arrive from far away, however, even from another SDH network. The generation point of the VC-12 signal is not necessarily situated in the SDH network to which the particular HDSL modem is linked, but it may be located in another SDH network from where it has been transmitted to the network to which the HDSL link is connected. The generation point may be situated, for example, in an SDH network located within another country, and thus the VC-12 signal to be transmitted is not necessarily synchronized with the network to which the HDSL link is connected. This is due to the slight difference in rate between the SDH networks, which in turn results from the networks using different timing sources.

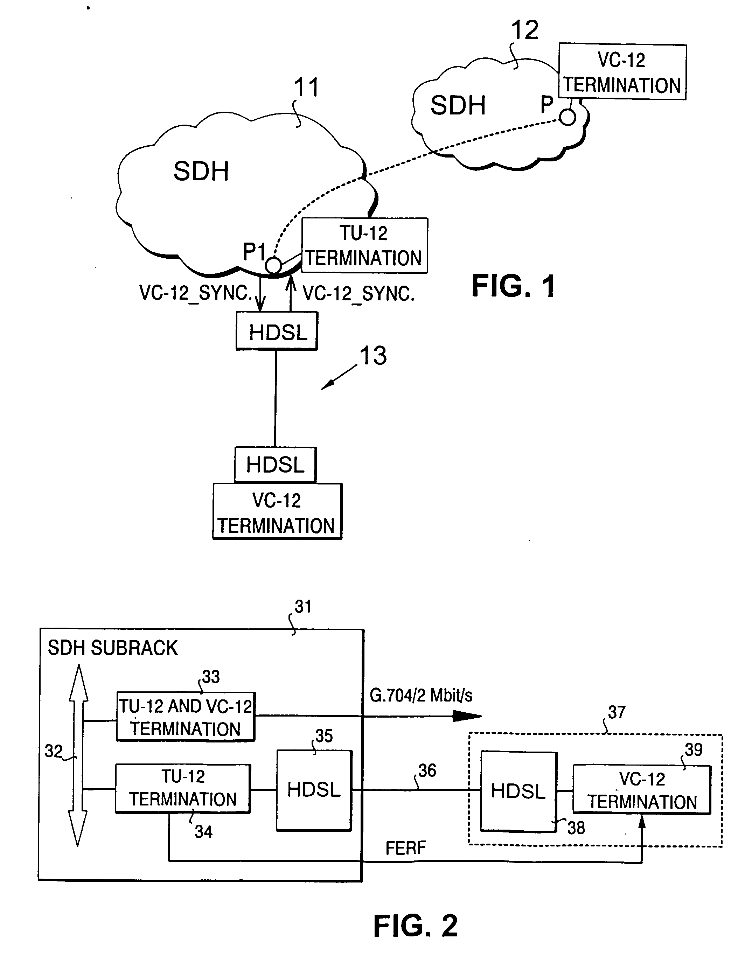

A case similar to the one described above is shown in the accompanying Figure 1 representing two separate SDH networks 11 and 12, which are synchronized from different timing sources. The VC-12 signal is formed in this exemplary case in point P of the network 12, from where it is transmitted to point P1 on the edge of the network 11, the HDSL link 13 being connected to the latter point. The interpretation of the TU-12 pointer is performed in point P1 (due to the bidirectional link, the corresponding function is described in the figure with the term "termination", which means both pointer interpretation and generation, the latter occurring in an opposite direction of transmission). The VC-12 signal found as a result of the pointer interpretation is mapped into the frame structure of the HDSL system, where the VC-12 data is transmitted to the subscriber end of the HDSL link, where VC-12 termination (i.e. in this transmission direction the disassembly of the VC-12 frame) is performed. The frame synchronization signals transmitted over the interface between the SDH network and the HDSL system are denoted in Figure 1 with reference symbol VC-12_SYNC.

In a case like Figure 1, when other kind of information, e.g. control information, is transmitted to an HDSL link, the information is synchronized with the timing source of the network where it is formed. However, this control information does not pass through the networks in the same way as the VC-12 frames, since there are no similar justification procedures, based on pointers, for the control information as there are for the actual data. Therefore there are sometimes errors in the control information transmitted to the HDSL link, since the incoming signal and the HDSL link are not quite synchronized.

In many cases the access network, to which the HDSL link also belongs, has its own operator. (Access network refers to the part reserved for the end-user of the telecommunications network, in which part the rates of the signals to be transmitted are lower than the rate of the STM-1 signal of the SDH network.) Thus, the basic idea of the ETSI recommendations could in the above-described cases lead to the reliability of the HDSL link being dependent on the quality of the signal transmitted by another operator (the operator of the network where the signal is formed), for example the quality of the synchronization. Such a situation is naturally not desirable for the operator responsible for the HDSL link.

The basic idea of the ETSI recommendations also leads to another problem which is illustrated in Figure 2, which shows in greater detail the interface of the SDH network and the HDSL link, operating in the manner suggested by ETSI. A subrack 31 of a node equipment situated on the edge (e.g. point P1 in Figure 1) of the SDH network typically comprises a bus 32, where TU-level signals are transmitted. TU-12 signals from the SDH network are passed to a TU-12 termination unit 34, where the interpretation of the TU-12 pointer, and in the other transmission direction also the generation of the pointer, are performed (due to the bidirectional link, the termination refers in this connection both to the interpretation and generation). As a result of the pointer interpretation, the phase of the VC-12 signal is found, and the VC-12 frames can be mapped in the HDSL device 35 into the core frame which is transmitted further within the HDSL frame via twin cables 36 to a device 37 located on the subscriber side of the link. An HDSL device 38 of the subscriber side comprises a VC-12 termination unit, where the VC-12 frame is disassembled (and the VC-12 frames transmitted to the SDH network are assembled).

The other components (cross-connect devices or the like), which are connected to the bus 32 of the subrack and through which the TU-12 signal is transmitted further to the SDH network, are not described in greater detail, since they are not part of the present invention. The more detailed structure of these other components may also be modified within the prior art.

In order to distribute from the subrack also a normal 2,048 Mbit/s signal according to the G.703/704 specifications, the subrack also typically comprises a termination unit where the termination of both TU-12 and VC-12 signals is performed (the interpretation and generation of TU-12 pointers and the disassembly and assembly of VC-12 signals). This termination unit is denoted by reference numeral 33.

The problem referred to above results from the pointer interpretation of the TU-12 signal transmitted to the subscriber being performed in the unit 34. If, as a result of the interpretation, the state machine of the unit 34 enters the LOP state (Loss of Pointer) or the AIS state (Alarm Indication Signal), data indicating the state must be placed in the frame transmitted back (in addition to the normal state NORM, the aforementioned states are the main states of the state machine of the pointer, according to the SDH specifications). This means that in the VC-12 termination unit 39 of the subscriber end, a FERF bit (Far End Receive Failure) in the VC-12 frame must be set, in the overhead byte of the frame to be transmitted back (the eighth bit in a V5 byte), to a value corresponding to the state in question. The corresponding data must be transmitted over the HDSL link from the unit 34 performing the interpretation to the unit (unit 39) on the subscriber end, forming the frame to be transmitted back (this operation is denoted in the figure by reference symbol FERF). The greatest problem in this case is due to the time demands, set in the SDH recommendations, according to which this data must be transmitted back within two multiframes (corresponds to 4 milliseconds). Complying with such a time demand is difficult and requires more complex equipment than previously.

The purpose of the present invention is to eliminate the above-described problems by providing a new type of method of connecting the SDH network and the HDSL link. This aim is achieved with the method according to the invention, which is characterized in that a TU-12 level signal is transmitted over the HDSL link by performing the interpretation and generation of the TU-12 pointers in the subscriber end of the HDSL link.

The idea of the invention is thus to transmit a TU-12 signal as such over the HDSL link and to perform the interpretation of the TU-12 pointers only beyond the HDSL link. The idea is thus in a way to transfer some properties (justification procedure) of the SDH network to the part of the telecommunications network situated beyond the HDSL link.

When the arrangement according to the present invention is used, the aforementioned time demand causes no problems since the interpretation of the TU-12 pointer and the generation of the VC-12 frame transmitted back are performed at the same point.

In the following, the invention and its preferred embodiments will be described in greater detail with reference to Figures 3 to 5 in the examples according to the accompanying drawings, in which
Figure 1 shows two separate SDH networks, to one of which an HDSL link is connected.
Figure 2 illustrates the manner in which an HDSL link is connected to an SDH network according to the principle of the ETSI recommendations,
Figure 3 illustrates the manner in which an HDSL link is connected to an SDH network according to the principle of the present invention,
Figure 4 shows a first preferred manner of mapping a TU-12 frame into a core frame of an HDSL link, and
Figure 5 shows a second preferred manner of mapping a TU-12 frame into a core frame of an HDSL link.

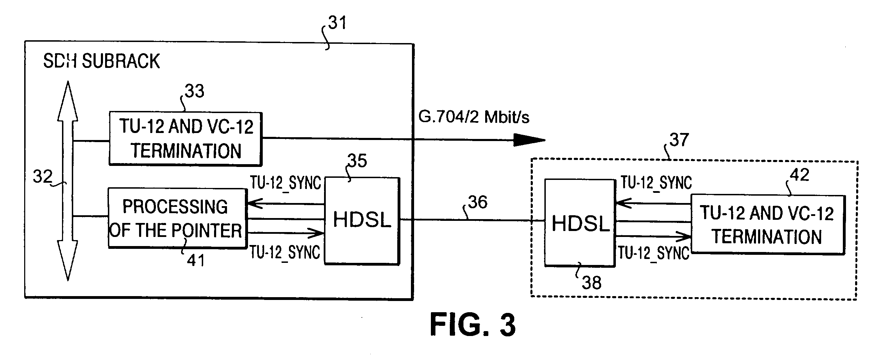

The arrangement according to the invention shown in Figure 3 corresponds otherwise to the known arrangement shown in Figure 2, but in the equipment of the invention the termination of the TU-12 frame is not performed in the SDH subrack, but the termination has been transferred to the termination unit 42 of the HDSL device situated at the subscriber end, the termination of both TU-12 and VC-12 frames occurring in this unit (the interpretation and generation of the TU pointers and the disassembly and assembly of VC-12 frames). Furthermore, in the arrangement according to the invention there is between the data bus 32 of the SDH subrack and the HDSL equipment only the processing unit 41 of the pointer, in which unit new state data is calculated for the pointers of the TU-12 signals to be transmitted to the SDH network. In the opposite direction of transmission (from the SDH network to the subscriber), no processing is performed in the processing unit, but the TU-12 signals are transmitted as such to the HDSL link. In the transmission from the subscriber to the SDH network, new values have to be calculated for the TU pointers in the SDH subrack, since the TU-12 frames must be transmitted on the bus in a particular phase (required by the bus), and the TU-12 frames from the subscriber cannot be aligned with the frame alignment required by the bus, for the reason alone that the length (delay) of the subscriber lines varies. The frame synchronization signals (indicating the location of the V1 byte of the TU-12 frame) are denoted in Figure 3 by reference symbol TU-12_SYNC.

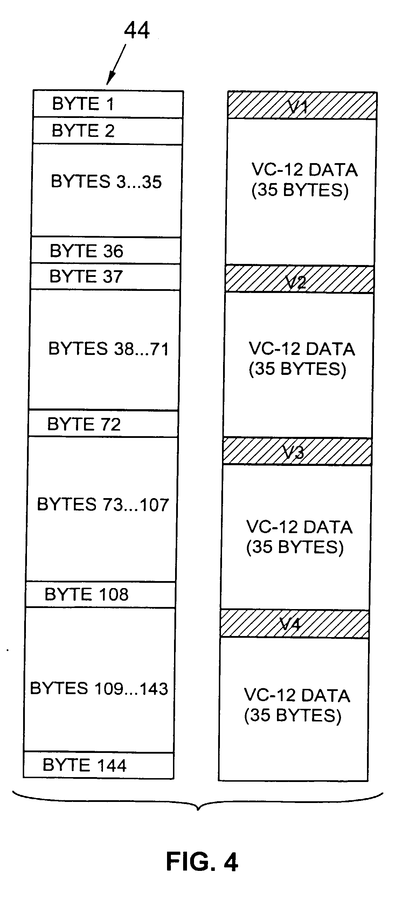

The TU-12 frame may be mapped into the core frame of the HDSL link for example in the manner shown in the accompanying Figure 4. The left side of the figure shows one HDSL core frame 44 having the length of 500 µs and 144 bytes. The V1 byte is mapped, according to the invention, into the first byte of the core frame after which the other pointer bytes (V2...V4) are located at even intervals in the frame, i.e. in positions 37, 73 and 109. The advantage of this mapping alternative is that the TU-12 frame may be transmitted as such to the HDSL system. On the basis of the V1 and V2 bytes found, the pointer state is interpreted in a manner known per se. The pointer value obtained on the basis of the interpretation indicates then the location of the first byte of the VC-12 frame, i.e. the location of the V5 byte in the TU-12 frame.

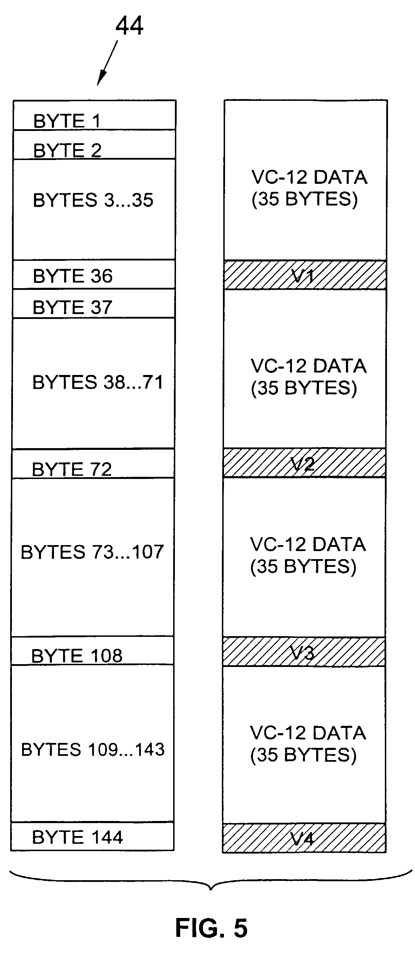

Figure 5 shows another mapping alternative. In this case, the V1 byte is mapped into byte 36 of the core frame, after which the other V bytes (V2...V4) are again located at even intervals in the frame, i.e. in bytes 72, 108 and 144. In the mapping of the VC-12 signal according to the aforementioned ETSI recommendation, these bytes are fixed stuffing.

Even though on the basis of Figures 2 and 3 it might seem that the equipment at the subscriber end would be more complex than previously when the method according to the invention is used, this is not the case since the operations performed by units 41 and 42 correspond to the operations performed everywhere in the SDH network, wherefore these units can be realized by means of readily available circuit arrangements. On the other hand, the mere TU-12 termination or VC-12 termination (which are needed in the arrangement of Figure 2) is not a common operation in the SDH network. Thus, the invention also has the advantage that it is more functional and the circuit arrangements it requires are more consistent with the arrangements already existing in the SDH systems.

Even though the invention is described above with reference to the examples according to the accompanying drawings, it is clear that the invention is not restricted thereto, but it can be modified in many ways within the scope disclosed in the appended claims. Thus, for example the more detailed structure of the equipment may be modified in many ways without deviating from the principle according to the invention.

### List of references:

[1]. CCITT Blue Book, Recommendation G.709: "Synchronous Multiplexing Structure", May 1990.
[2]. SDH - Ny digital hierarki, TELE 2/90.

## Claims

1. A method for connecting an HDSL transmission link (36) to an SDH network (11), according to which method
- data from the SDH network (11) to the HDSL link (13) is mapped into the frame structure according to the HDSL system, and
- pointers required by the SDH network are generated into the frames passing from the HDSL link (13) to the SDH network (11), the pointers indicating the phase of the payload within the frame structure, characterised in that a TU-12 level signal is transmitted over the HDSL link by performing the interpretation and generation of the TU-12 pointers in the subscriber end (37) of the HDSL link.

2. A method according to claim 1, characterised in that the TU-12 signal is mapped into the core frame of the HDSL system by transmitting the V1 byte of the TU-12 frame in the first byte of the core frame.

3. A method according to claim 1, characterised in that the TU-12 signal is mapped into the core frame of the HDSL system by transmitting the V1 byte of the TU-12 frame in byte 37 of the core frame.

## Patentansprüche

1. Verfahren zur Verbindung einer HDSL Übertragungsstrecke (36) mit einem SDH Netzwerk (11), wobei gemäß dem Verfahren:
- Daten von dem SDH Netzwerk (11) an die HDSL Strecke (13) in die Rahmenstruktur gemäß dem HDSL System abgebildet werden, und
- für das SDH Netzwerk erforderliche Zeiger in den Rahmen erzeugt werden, die von der HDSL Strecke (13) zu dem SDH Netzwerk (11) übergehen, wobei die Zeiger die Phase der Nutzdatenlast innerhalb der Rahmenstruktur angeben, dadurch gekennzeichnet, daß ein TU-12-Stufen Signal über die HDSL Strecke übertragen wird, indem die Interpretation und Erzeugung der TU-12 Zeiger in der Teilnehmerendstelle (37) der HDSL Strecke durchgeführt wird.

2. Verfahren nach Anspruch 1, dadurch gekennzeichnet, daß das TU-12 Signal in den Kernrahmen des HDSL Systems abgebildet wird, indem das V1 Byte des TU-12 Rahmens in dem ersten Byte des Kernrahmens übertragen wird.

3. Verfahren nach Anspruch 1, dadurch gekennzeichnet, daß das TU-12 Signal in den Kernrahmen des HDSL Systems abgebildet wird, indem das V1 Byte des TU-12 Rahmens in Byte 37 des Kernrahmens übertragen wird.

## Revendications

1. Procédé pour connecter une liaison de transmission HDSL (36) à un réseau SDH (11), procédé selon lequel
- des données transmises depuis le réseau SDH (11) vers la liaison HDSL (13) acquièrent la configuration de la structure de trame selon le système HDSL, et
- des pointeurs requis par le réseau SDH sont générés dans les trames passant de la liaison HDSL (13) au réseau SDH (11), les pointeurs indiquant la phase des données utiles présentes dans la structure de trame, caractérisé en ce qu'un signal de niveau TU-12 est transmis via la liaison HDSL en effectuant l'interprétation et la génération des pointeurs de TU-12 à l'extrémité abonné (37) de la liaison HDSL.

2. Procédé selon la revendication 1, caractérisé en ce que le signal TU-12 acquiert la configuration de la trame centrale du système HDSL en transmettant l'octet V1 de la trame TU-12 dans le premier octet de la trame centrale.

3. Procédé selon la revendication 1, caractérisé en ce que le signal TU-12 acquiert la configuration de la trame centrale du système HDSL en transmettant l'octet V1 de la trame TU-12 dans l'octet 37 de la trame centrale.
